# EUROPEAN PATENT APPLICATION

(11) **EP 1 468 883 A1**
(43) Date of publication of application: **20.10.2004**
(21) Application number: 04008987.2
(22) Date of filing: 15.04.2004
(51) Int. Cl.: B60R 22/28, B60R 22/36

(54) **Seat belt retractor**

(30) Priority: 15.04.2003 JP 2003110068; 31.07.2003 JP 2003283373; 12.12.2003 JP 2003414607
(71) Applicant: TAKATA CORPORATION, Minato-ku, Tokyo 106-8510 (JP)
(72) Inventor: Shiotani, Masahiro, Tokyo 106-8510 (JP); Hamaue, Tetsuya, Tokyo 106-8510 (JP)
(74) Representative: Banzer, Hans-Jörg, Dipl.-Ing.

(57) **Abstract**

In an emergency, when a spool (4) rotates in the direction of unwinding a seat belt relative to a locking base (14), a strip (22) is deformed by a guide groove (21d) of a guide plate (21) fitted to the locking base (14), thereby absorbing impact energy, generating an EA load, and restricting the load applied to the seat belt (3). When a uniformly narrow portion (22d) whose width is narrower than that of a main portion (22a) is deformed, a uniformly small EA load is generated. When a sloping portion (22e) is deformed, a continuously decreasing EA load is generated. Therefore, EA load due to deformation of the strip (22) is variable, and an energy absorbing mechanism has a simple structure and can be produced at a low cost.

## Description

### [Technical Field of the Invention]

The present invention relates to a seat belt retractor for retracting a seat belt so that it can be withdrawn, and a seat belt device equipped with this seat belt retractor. More specifically, the present invention relates to a seat belt retractor including an energy absorbing mechanism (hereinafter referred to as "EA mechanism") for absorbing the energy of impact made by the seat belt on a wearer displaced due to inertia in an emergency, such as a collision, causing a large deceleration, and a seat belt device equipped with this seat belt retractor.

### [Description of the Related Art]

Known seat belt devices installed on vehicles, such as an automobile, include at least a seat belt retractor for retracting a seat belt, a seat belt which is withdrawn from the seat belt retractor and whose end is connected to an auto body, a buckle fixed to the auto body, and a tongue which is slidably fitted to the seat belt and which can engage with the buckle.

When the seat belt is not worn, the seat belt is wound in a spool of the seat belt retractor. After being seated, an occupant withdraws the seat belt from the seat belt retractor to a predetermined length and then engages a tongue with a buckle. The seat belt is thus worn by the occupant. When the seat belt is worn by the occupant, the portion between the tongue and the seat belt retractor is worn over the shoulder and chest as a shoulder belt, and the portion between the tongue and a connection with the auto body is worn round the waist as a lap belt.

In this state of wearing, a locking mechanism operates to prevent the spool from rotating in the direction of unwinding in the emergency described above, thereby preventing the seat belt from being withdrawn. This enables the shoulder belt to restrain the shoulder and chest of the occupant and the lap belt to restrain the waist of the occupant. The seat belt device thus prevents the occupant from being thrown forward to protect the occupant.

In this type of a known seat belt retractor, when the seat belt restrains the occupant to protect the occupant in an emergency such as a collision, the occupant is displaced forward due to a large inertia because a large deceleration occurs. Consequently, a large load is applied on the seat belt, and the seat belt makes a large impact on the occupant. Although this impact on the occupant does not cause serious problems, it is desirable to absorb the energy of the impact to restrict the impact force if possible.

To achieve this, a seat belt retractor provided with a torsion bar has been developed. In the above-described emergency when the seat belt is worn, the torsion bar absorbs the impact energy to restrict the load applied to the seat belt.

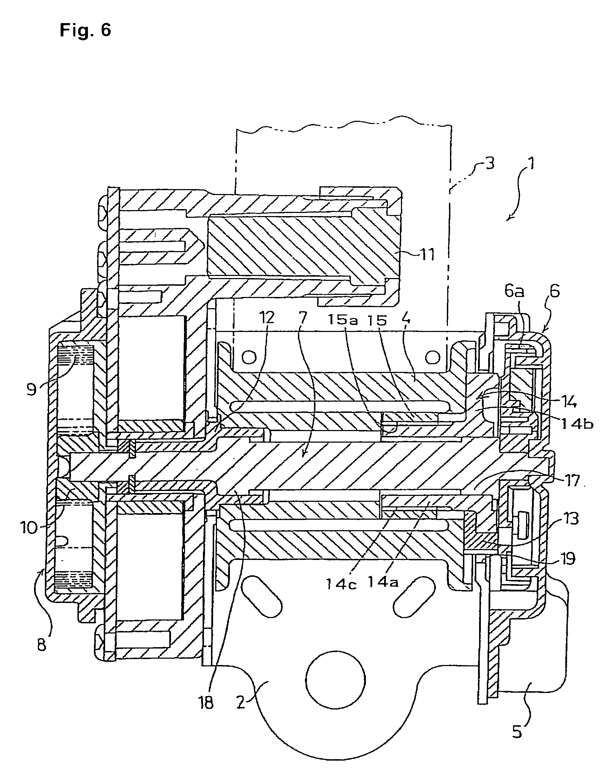

FIG. 6 is a vertical sectional view showing an example of a seat belt retractor including such a torsion bar. Reference numeral 1 represents a seat belt retractor. Reference numeral 2 represents a U-shaped frame. Reference numeral 3 represents a seat belt. Reference numeral 4 represents a spool, which is supported rotatably between both side walls of the U-shaped frame 2, and which is for winding the seat belt 3. Reference numeral 5 represents a deceleration sensing means, which is activated when it senses a large deceleration that occurs in the above-described emergency. Reference numeral 6 represents a locking mechanism, which is activated by the deceleration sensing means 5 to prevent the spool 4 from rotating at least in the direction of unwinding the seat belt. Reference numeral 7 represents a torsion bar, which is inserted into the center of the spool 4, and which connects the spool 4 and the locking mechanism 6 rotatably. Reference numeral 8 represents a spring means, which constantly urges the spool 4 in the direction of winding the seat belt by the spring force of a spiral spring 9 via a bush 10. Reference numeral 11 represents a pre-tensioner, which is activated in the above-described emergency to produce a belt winding torque. Reference numeral 12 represents a bush, which transmits a seat belt winding torque of the pre-tensioner 11 to the spool 4.

The locking mechanism 6 includes a locking base 14 (corresponding to a locking member of the present invention), which is supported by a first torque transmitting portion 17 of the torsion bar 7 so as to rotate together therewith, and which holds a pawl 13 rockably. The locking mechanism 6 further includes a locking gear 6a. The locking gear 6a rotates together with the torsion bar 7 during normal times and stops in an emergency by operation of the deceleration sensing means 5 to make a rotational difference relative to the torsion bar 7, thereby engaging the pawl 13 with an internal teeth 19 in the side wall of the frame 2 and preventing the locking base 14 and the spool 4 from rotating in the direction of unwinding the seat belt.

At the torsion bar 7, there are formed the first torque transmitting portion 17, which engages the locking base 14 so that it is not capable of rotating relative to the locking base 14, and the second torque transmitting portion 18, which engages the spool 4 so that it is not capable of rotating relative to the spool 4.

A ring-shaped relative rotation locking member 15 is disposed between the spool 4 and the shaft portion 14a of the locking base 14. This relative rotation locking member 15 has a female thread 15a on the inner peripheral surface. The shaft portion 14a of the locking base 14 has a male thread 14c. The relative rotation locking member 15 is screwed on the shaft portion 14a of the locking base 14, and fitted into the axial hole of the spool 4 so that it is not capable of rotating relatively and capable of moving axially. When the spool 4 rotates in the direction of unwinding the seat belt relative to the locking base 14, the relative rotation locking member 15 rotates together with the spool 4 and moves to the right in FIG. 6.

Due to the spring force of the spring means 8, the spool 4 is urged constantly in the direction of winding the seat belt via the bush 10, torsion bar 7, the second torque transmitting portion 18 of the torsion bar 7, and the bush 12. When the pre-tensioner 11 is in operation, the belt-winding torque produced in the pre-tensioner 11 is transmitted to the spool 4 via the bush 12. In this way, the spool 4 winds the seat belt to a predetermined length.

In the known seat belt retractor 1 configured as above, when the seat belt is not worn, the seat belt 3 is retracted completely by the urging force of the spring means 8. When the seat belt 3 is withdrawn in normal speed for wearing, the spool 4 rotates in the direction of unwinding the seat belt, and the seat belt 3 is withdrawn smoothly. After a tongue (not shown), which is slidably fitted to the seat belt 3, is inserted into and engaged with a buckle (not shown), the portion of the seat belt 3 that has been withdrawn to excess is wound by the spool 4 by the urging force of the spring means 8. In this way, the seat belt 3 is fitted to an occupant without inflicting a feeling of pressure.

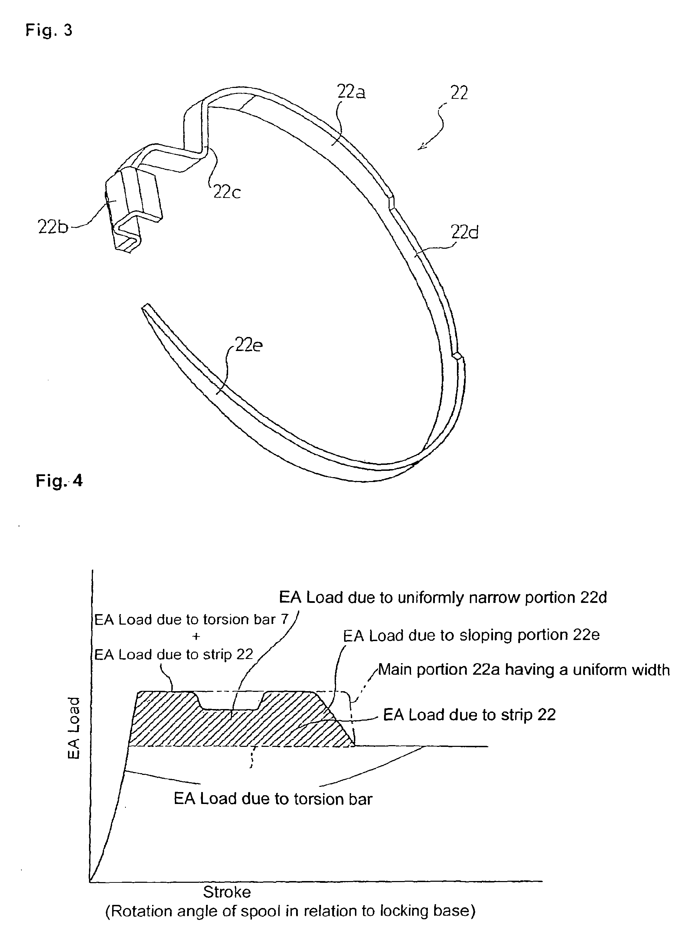

In the above-described emergency, seat belt winding torque produced by the pre-tensioner 11 is transmitted to the spool 4. The spool 4 winds the seat belt 3 to a predetermined length to protect the occupant quickly. On the other hand, the deceleration sensing means 5 is activated by the large deceleration occurring in the emergency, and then the locking mechanism 6 is activated. By the operation of the deceleration sensing means 5, the lock gear 6a is prevented from rotating in the direction of unwinding the seat belt. Then the pawl 13 of the locking mechanism 6 is turned to be engaged with the internal teeth 19 in the side wall of the frame 2. Then, since the locking base 14 is prevented from rotating in the direction of unwinding the seat belt, the torsion bar 7 is twisted, and the spool 4 alone rotates in the direction of unwinding the seat belt relative to the locking base 14. After that, the spool 4 rotates in the direction of unwinding the seat belt, twisting the torsion bar 7. Due to twisting torque of the torsion bar 7, the energy of impact made on the occupant is absorbed and eased, and the load applied to the seat belt 3 is restricted. This torsion bar 7 constitutes the EA mechanism. The characteristics of the counter load (hereinafter referred to as "EA load") generated by the EA mechanism is shown in FIG. 4. That is to say, the EA load generated by the torsion bar 7 increases gradually as the stroke (degree) of rotation of the spool 4 relative to the locking base 14 increases, then becomes a fixed value.

Due to rotation of the spool 4 in the direction of unwinding the seat belt relative to the locking base 14, the relative rotation locking member 15 moves axially towards the right in FIG. 6. When the relative rotation locking member 15 reaches the end of the male thread, it is prevented from moving further to the right. Therefore, the rotation is locked. The relative rotation locking member 15 thus stops rotating relative to the locking base 14. (In another case, the relative rotation locking member 15 comes into contact with the side surface of a flange 14b of the locking base 14, and it is prevented from moving further to the right.) Therefore, the spool 4 also stops rotating relative to the locking base 14. That is to say, the rotation of the spool 4 in the direction of unwinding the seat belt is locked. The seat belt 3 is prevented from being withdrawn. The seat belt 3 prevents displacement of the occupants caused by inertia to protect the occupant.

When the seat belt is withdrawn suddenly, the locking base 14 of the locking mechanism 6 of this known seat belt retractor 1 also rotates in the direction of unwinding the seat belt relative to the locking gear 6a. The pawl 13 of the locking mechanism 6 engages with the inner teeth 19 of the side wall of the frame 2, and the locking base 14 is prevented from rotating. Therefore, the spool 4 is prevented from rotating in the direction of unwinding, via the torsion bar 7. The seat belt is thus prevented from being withdrawn.

In such a known seat belt retractor 1, a single EA load is generated by the torsion bar 7 alone. By this single EA load, the energy of impact made on the occupant is absorbed. In order to make the impact load to the occupant as small as possible, a minimum and fixed EA load that can absorb the impact energy to the occupant is chosen.

Although this known torsion bar can absorb the impact energy to the occupant in an emergency, it is desirable to absorb this impact energy to the occupant as effectively and appropriately as possible.

For example, Japanese Unexamined Patent Application Publication No. 2002-53007 discloses an impact energy absorber disposed between a spool and a locking base, the absorber including a wire and engaging pins. When the spool rotates relative to the locking base, the wire is deformed by the engaging pins, thereby absorbing the impact energy.

For example, Japanese Unexamined Patent Application Publication No. 2000-85527 discloses an impact energy absorber including: a carrier fixed to one end of a torsion rod so as to rotate together with the end; a housing having a curved guide groove curved; and a band-shaped pulling means one end of which is connected to the carrier and which is fitted in the guide groove. When the carrier rotates relative to the housing, the pulling means is pulled and forced through the guide groove. The pulling means is deformed along the guide groove, thereby absorbing the impact energy.

### [Problems to be Solved by the Invention]

However, in the energy absorbing means disclosed in Japanese Unexamined Patent Application Publication No. 2002-53007, it is necessary to engage the wire with all of the three engaging pins by meandering. In addition, it is necessary to insert the end of the wire into a hole formed in the locking base. Therefore, the energy absorbing means is complex in structure and its assembling needs a lot of time and labor. Furthermore, in order to have a desired energy absorbing effect stably, it is necessary to provide the three engaging pins in the predetermined places of the spool. Moreover, for the above-described reason, this energy absorbing means is comparatively expensive.

The energy absorbing means disclosed in Japanese Unexamined Patent Application Publication No. 2000-85527 absorbs energy by deforming a cylindrical portion plastically toward the inside. However, it is difficult to deform the cylindrical portion plastically toward the inside evenly. Therefore, it is difficult to have the desired energy absorbing effect stably. In addition, since the energy absorbing means is composed of a cylindrical portion and a flange portion and it is necessary to form a cut-off portion in the cylindrical portion, the energy absorbing means is complex in structure, comparatively difficult to process, and expensive. In addition, the cylindrical portion makes the axial size of the retractor large.

In view of the above-described situations, it is an object of the present invention to provide a seat belt retractor in which EA load due to deformation of an energy absorbing member is variable, and which has a simple structure and can be produced at a low cost.

It is an object according to an embodiment of the present invention to provide a seat belt device which is equipped with a seat belt retractor according to the present invention, which effectively absorbs the energy of impact made on an occupant in an emergency, and which restrains and protects the occupant appropriately.

### [Means for Solving the Problems]

This object is achieved by a seat belt retractor according to claim 1. The dependent claims define preferred and advantageous embodiments of the invention.

To solve the above-described problems, the seat belt retractor includes a spool for winding a seat belt, a locking mechanism having a locking member that rotates together with the spool during normal times and that is prevented from rotating in the direction of unwinding the seat belt in an emergency, and an energy absorbing mechanism provided between the spool and the locking member and absorbing the energy of impact made on an occupant when the spool rotates in the direction of unwinding the seat belt relative to the locking member in an emergency. The energy absorbing mechanism includes a strip energy absorbing member provided in one of the spool and the locking member, and deforming means provided in the other of the spool and the locking member for deforming the energy absorbing member. The width of the strip energy absorbing member varies from part to part. The deforming means deforms the energy absorbing member that moves with the rotation of the spool when the spool rotates in the direction of unwinding the seat belt relative to the locking member that is prevented from rotating in the direction of unwinding the seat belt in an emergency, thereby restricting the load applied to the seat belt and absorbing the impact energy, and the amount of the absorbed impact energy varies from stage to stage.

According to a preferred embodiment of the invention, the deforming means is an arc groove and the strip energy absorbing member is forced through the groove to be deformed.

According to a further preferred embodiment of the invention, the spool and the locking member are connected with a torsion bar that twists when the spool and the locking member rotate relative to each other.

According to the invention, a seat belt device preferably includes a seat belt retractor according to the invention, a seat belt which is withdrawn from the seat belt retractor and whose end is connected to an auto body, a buckle fixed to the auto body, and a tongue which is slidably fitted to the seat belt and which can engage with the buckle.

### [Operation]

In the seat belt retractor according to the invention, EA load due to deformation of the energy absorbing member is variable according to the width of the member. Therefore, EA load is adjustable to, for example, the type of automobile. By adjusting an EA load to, for example, the type of automobile, the energy of impact made on an occupant is absorbed more effectively and more appropriately.

In this case, since the energy absorbing member is formed of a strip plate, the energy absorbing member is deformed continuously. Therefore, despite simple structure, the energy absorbing effect of the energy absorbing member is more stable.

Since the energy absorbing mechanism is a simple strip shape, it is easily assembled and is produced at a low cost.

Especially in the case that the spool and the locking member are connected with a torsion bar, a comparatively large EA load consisting of an EA load due to twist-deformation of the torsion bar and another EA load due to deformation, and a comparatively small EA load consisting of only the EA load due to twist-deformation of the torsion bar are generated.

Therefore, EA load is flexibly adjustable, and the energy of impact made on an occupant is absorbed more effectively and more appropriately.

The seat belt device according to the invention is equipped with a seat belt retractor according to the invention, thereby absorbing the energy of impact made on the occupant effectively, and restraining and protecting the occupant appropriately.

### [Brief Description of the Drawings]

FIGS. 1 (a) and 1 (b) show a first embodiment of a seat belt retractor according to the present invention. FIG. 1 (a) is a sectional view showing a spool, a torsion bar, and a locking base. These elements correspond to the spool, torsion bar, and locking base of the known seat belt retractor shown in FIG. 6. FIG. 1 (b) is a sectional view taken along line IB-IB of FIG. 1 (a) and schematically shows an energy absorbing mechanism included in the seat belt retractor of the first embodiment.
FIG. 2 is an exploded perspective view of the portion shown in FIG. 1 (a).
FIG. 3 is a perspective view of a strip of the first embodiment.
FIG. 4 is a graph showing EA load characteristics.
FIGS. 5 (a) and 5 (b) show a second embodiment of the present invention. FIG. 5 (a) is a similar sectional view to FIG. 1 (b). FIG. 5 (b) is a perspective view of a strip of the second embodiment.
FIG. 6 is a sectional view schematically showing an example of known seat belt retractor having a torsion bar.

### [Description of the Embodiments]

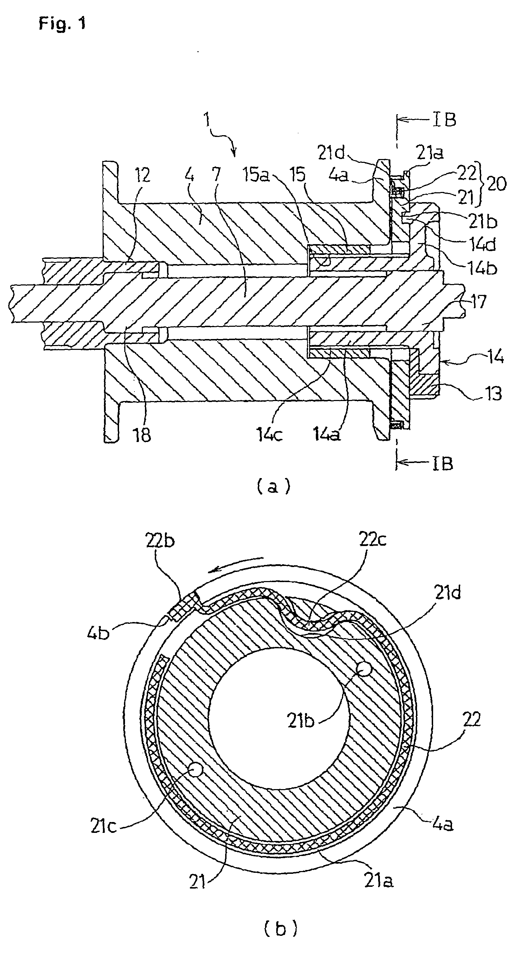

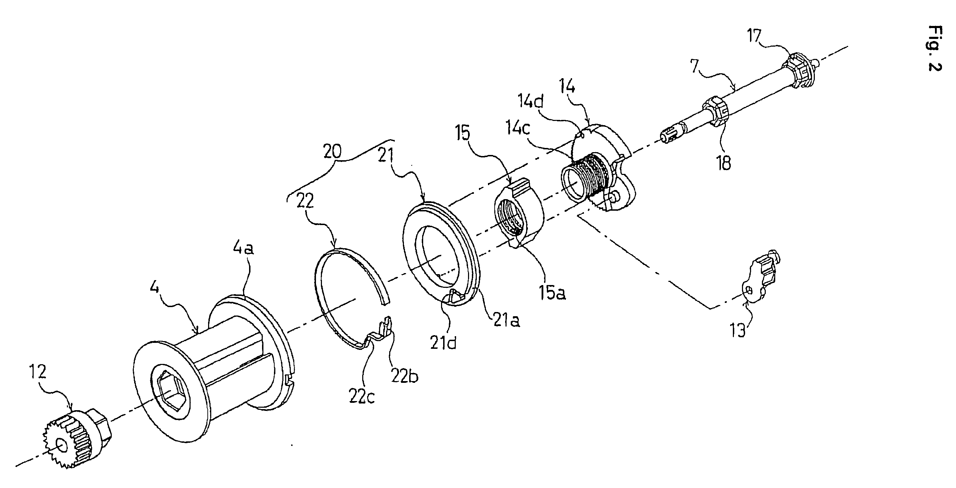

The embodiments of the present invention will now be described with reference to the drawings. FIG. 1 shows a first embodiment of a seat belt retractor of the present invention. FIG. 1 (a) is a sectional view showing a spool, a torsion bar, and a locking base. These elements correspond to the spool, torsion bar, and locking base of the known seat belt retractor shown in FIG. 6. FIG. 1 (b) is a sectional view taken along line IB-IB of FIG. 1 (a) and schematically shows an energy absorbing mechanism included in the seat belt retractor of the first embodiment. FIG. 2 is an exploded perspective view of the portion shown in FIG. 1 (a). Incidentally, in the description of the following embodiments of the present invention, the same reference numerals will be used to designate the same elements as those of the known seat belt retractor shown in FIG. 6, so that the description thereof will be omitted. In the seat belt retractor of this embodiment, elements not depicted in FIG. 1 (a) are the same as those of the known seat belt retractor shown in FIG. 6.

As shown in FIGS. 1 (a), 1 (b), and 2, the seat belt retractor 1 of the first embodiment includes a torsion bar 7 as in the known seat belt retractor shown in FIG. 6, and further includes an energy absorbing mechanism 20 provided between a spool 4 and a locking base 14. The energy absorbing mechanism 20 is provided with energy absorbing means for restricting the load applied to the seat belt in an emergency and for absorbing the impact energy applied to the occupant. The energy absorbing mechanism 20 includes a ring guide plate 21 and a strip 22 for absorbing energy. The guide plate 21 is disposed between the right side of the spool 4 and the left side of the flange 14b of the locking base 14. The strip 22 is formed of a long plate such as a stainless steel plate and is substantially ring-shaped.

The guide plate 21 has a flange 21a around the periphery and a predetermined number (two in FIG. 3) of engaging recesses 21b and 21c at a side facing the flange 14b. The guide plate 21 further has a substantially arc-shaped guide groove 21d for guiding the strip 22 at the other side facing the spool 4. The width of the guide groove 21d is larger than the thickness of the strip 22. The flange 14b of the locking base 14, at a side facing the guide plate 21, has engaging projections 14d (one of them is not shown) that correspond to the engaging recesses 21b and 21c and that can be fitted into them so that the locking base 14 can be fixed to the guide plate 21. As shown in FIG. 1 (a), the engaging projections 14d (one of them is not shown) are fitted into the recesses 21b and 21c, and the locking base 14 is fixed to the guide plate 21 so as to rotate together with the locking base 14.

As shown in FIG. 1 (b), the spool 4 has an engaging notch 4b on the rim of the right flange 4a. As shown in FIG. 3, a main portion 22a of the strip 22 has a uniform width. The strip 22 has a U-shaped engaging portion 22b which can engage with the engaging notch 4b of the spool 4 at one end. The engaging portion 22b is engaged with the engaging notch 4b of the spool 4. When the spool 4 rotates in the direction of unwinding the seat belt, the engaging portion 22b rotates together with the spool 4 in the same direction.

The strip 22 has an initially deformed portion 22c between the engaging portion 22b and the main portion 22a. As shown in FIG. 1 (b), the initially deformed portion 22c is shaped so as to be fitted in the guide groove 21d. The strip 22 has a uniformly narrow portion 22d whose width is uniform and narrower than that of the main portion 22a between the initially deformed portion 22c and an end opposite to the engaging portion 22a. The strip 22 has a sloping portion 22e whose width is narrower than that of the main portion 22a and decreases linearly or nonlinearly (linearly in FIG. 3) at the end opposite to the engaging portion 22b.

After the guide plate 21 has been fixed to the locking base 14, the initially deformed portion 22c of the strip 22 is fitted into the guide groove 21d as shown in FIG. 1 (b), so that the strip 22 is fitted to the guide plate 21. After the locking base 14 has been fitted to the spool 4 as in the known seat belt retractor, the engaging portion 22b is engaged with the engaging notch 4b of the spool 4. In this way, the spool 4, the locking base 14, the guide plate 21, and the strip 22 are assembled. In this state, as shown in FIGS. 1 (a) and 1 (b), the strip 22 except the engaging portion 22b and the initially deformed portion 22c fitted in the guide groove 21d is wound around the main body (except the flange 21a) of the guide plate 21. The flange 21a prevents the strip 22 from moving toward the locking base 14 to come off the main body of the guide plate 21.

The seat belt retractor 1 of the first embodiment is included in a seat belt device (not shown). As in the known seat belt device, this seat belt device includes at least a seat belt which is withdrawn from the seat belt retractor and whose end is connected to the auto body, a buckle fixed to the auto body, and a tongue which is slidably fitted to the seat belt and which can engage with the buckle.

In the seat belt retractor 1 of the first embodiment, when the tongue of the seat belt device is engaged with the buckle and the seat belt is worn by the occupant, the spool 4 and locking base 14 both start to rotate in the direction of unwinding the seat belt, in an emergency, due to the load from the seat belt withdrawn due to inertial movement of the occupant, as in the known retractor 1 described above. Then, in the emergency, the locking mechanism 6 is activated and it immediately locks the locking base 14, thereby preventing the locking base 14 from rotating in the direction of unwinding the seat belt. The force in the direction of unwinding the seat belt is applied to the spool 4 from the seat belt 3. The spool 4 starts to rotate in the direction of unwinding the seat belt relative to the locking base 14. The torsion bar 7 is twisted as in the case of the retractor shown in FIG. 6. The spool 4 and the relative rotation locking member 15 rotate in the direction of unwinding the seat belt, relative to the locking base 14.

Due to relative rotation of the relative rotation locking member 15 to the locking base 14, the relative rotation locking member 15 moves toward the flange 14b axially (to the right in FIG. 1(a)).

The impact energy is absorbed by twist-deformation of the torsion bar 7, and EA load is generated. The load applied to the seat belt 3 is counteracted by this EA load.

The spool 4 rotates in the direction of unwinding the seat belt, and the engaging portion 22b rotates in the same direction. Due to rotation of the spool 4, the strip 22 is pulled in the same direction via the engaging portion 22b. The initially deformed portion 22c moves in the direction of exiting the guide groove 21d. The initially deformed portion 22c is deformed by the guide groove 21d along the guide groove 21d. Due to deformation of the initially deformed portion 22c by the guide groove 21d, deformation resistance (bending resistance) occurs, and sliding resistance occurs between the initially deformed portion 22c and the guide groove 21d. Due to bending resistance and sliding resistance, impact energy is absorbed, and EA load is generated. The load applied to the seat belt 3 is counteracted by this EA load. After the initially deformed portion 22c, the main portion 22a (the side opposite from the engaging portion 22b) enters and passes through the guide groove 21d. Due to passing of the main portion 22a through the guide groove 21d, the strip 22 is deformed continuously.

Next, the uniformly narrow portion 22d enters and passes through the guide groove 21d. The uniformly narrow portion 22d is deformed continuously. Since the width of the uniformly narrow portion 22d is narrower than that of the main portion 22a, the bending resistance and sliding resistance are smaller. Due to the smaller resistance, the EA load is smaller than that when the main portion 22a passes through the guide groove 21d.

Next, the main portion 22a enters and passes through the guide groove 21d, thereby generating EA load. The amount of EA load returns to the former amount. Finally, the sloping portion 22e enters and passes through the guide groove 21d. At this time, the sloping portion 22e is deformed continuously. Since the width of the sloping portion 22e decreases continuously, the bending resistance and sliding resistance decrease continuously. Due to the continuously decreasing resistance, EA load decreases continuously. When the width of the sloping portion 22e decreases linearly, the EA load continuously decreases linearly. When the width of the sloping portion 22e decreases nonlinearly, the EA load continuously decreases nonlinearly.

In this way, due to deformation of the strip 22, EA load is generated to counteract the load applied to the seat belt 3, and the impact energy is further absorbed.

After the rotation of the locking base 14 is locked, the spool 4 rotates almost 360 degrees relative to the locking base 14, while the strip 22 passes through the guide groove 21d. Then, impact energy absorption due to deformation of the strip 22 is stopped. Since only the impact energy absorption due to twist-deformation of the torsion bar 7 is performed, only the EA load due to twist-deformation of the torsion bar 7 is generated. Therefore, the EA load due to deformation of the strip 22 is as shown in FIG. 4.

When the relative rotation locking member 15 is prevented from moving axially to the right, the relative rotation locking member 15 is locked and the spool 4 is prevented from rotating relative to the locking base 14. That is to say, the spool 4 is prevented from rotating in the direction of unwinding the seat belt, and the seat belt 3 is prevented from being withdrawn. The occupant is thus prevented by the seat belt 3 from moving inertially to be protected.

As shown in FIG. 4 with a solid line, after the locking base 14 has been locked, a comparatively large EA load consisting of the EA load due to twist-deformation of the torsion bar 7 and the EA load due to deformation of the strip 22 is generated, then a comparatively small EA load consisting of only the EA load due to twist-deformation of the torsion bar 7 is generated. The EA load due to deformation of the strip 22 varies according to deformation of the main portion 22a, deformation of the uniformly narrow portion 22d, and the deformation of the sloping portion 22e. More specifically, just after the locking base 14 has been locked, the strip 22 is not pulled out due to slight looseness in fitting of the strip 22, and only the small EA load due to twist-deformation of the torsion bar 7 is generated. Then, the strip 22 is immediately tightened and is pulled out. Therefore, the EA load due to deformation of the strip 22 is generated.

In the seat belt retractor 1 of the first embodiment, the EA load due to deformation of the strip 22 is variable according to the width of the strip 22, that is to say, the main portion 22a, the uniformly narrow portion 22d, and the sloping portion 22e. Therefore, EA load can be adjusted to, for example, the type of automobile. More specifically, the energy of impact made on the occupant can be absorbed more effectively and more appropriately according to the type of automobile by determining the following: whether to use the uniformly narrow portion 22d or the sloping portion 22e alone, or to use them together; the position, width and length of the uniformly narrow portion 22d; and the position and inclination of the sloping portion 22e. (When the uniformly narrow portion 22d and the sloping portion 22e are used together, they may be separated or adjoined. The order in which they are provided is optional.)

The guide plate 21 has a simple ring shape, and the strip 22 is formed of a long plate. In addition, the strip 22 passes through the guide groove 21d continuously and it is deformed continuously. Therefore, despite simple structure, the energy absorbing effect of the guide plate 21 is more stable.

Since the guide plate 21 has a simple ring shape and is fitted axially, it is easy to fit the guide plate 21 to the locking base 14 and then to fit the locking base 14, together with the guide plate 21, to the spool 4. Therefore, the energy absorbing mechanism 20 has a simple structure and can be produced at a low cost.

Other structures and other operations of the first embodiment are the same as those of the known seat belt retractor 1 shown in FIG. 6.

In an emergency, a seat belt device equipped with the seat belt retractor 1 of the first embodiment can absorb the energy of impact made on the occupant effectively, and can restrain and protect the occupant appropriately.

Instead of the uniformly narrow portion 22d and sloping portion 22e formed in the strip 22, a uniformly wide portion whose width is wider than that of the main portion 23a, and a sloping portion whose width increases gradually may be formed in the strip 22. By combining the uniformly narrow portion 22d, sloping portion 22e, uniformly wide portion, and sloping portion whose width increases gradually, various EA loads can be generated.

The strip 22 may be disposed in the locking base 14, and the guide plate 21 may be disposed in the spool 4. In the present invention, instead of the torsion bar 7, a normal drive shaft may be used.

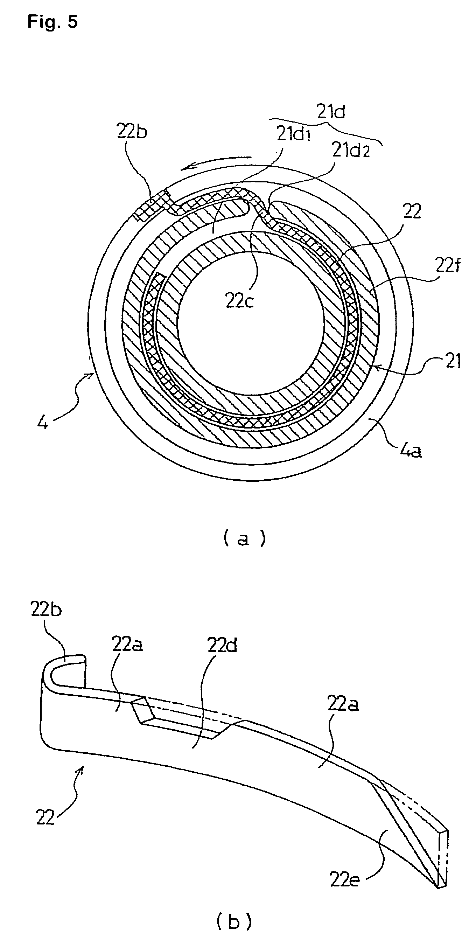

FIGS. 5 (a) and 5 (b) show a second embodiment of the present invention. FIG. 5 (a) is a sectional view similar to FIG. 1 (b). FIG. 5 (b) is a perspective view of a strip of the second embodiment. The same reference numerals will be used to designate the same elements as those of the first embodiment, so that the description will be omitted.

While the guide groove 21d of the guide plate 21 is formed in an arc in the first embodiment, in the second embodiment as shown in FIG. 5 (a), the guide groove 21d of the guide plate 21 includes a circular groove 21d₁ and a radial groove 21d₂ (formed in the outer circular portion 22f forming the circular groove 21d₁). As shown in FIG. 5 (b), an engaging portion 22b of the strip 22 has a U shape when viewed from the side (when viewed in the axial direction of the spool to which the strip 22 is fitted).

In the seat belt retractor 1 of the second embodiment, in an emergency, when the spool 4 rotates relative to the locking base 14 in the direction of unwinding the seat belt, the strip 22 is rubbed with and deformed by the edge of the outer circular portion 22f forming the circular groove 21d₁.

Other structures and other operations of the second embodiment are the same as those of the first embodiment. The EA load characteristics are shown in FIG. 4. Effects of the seat belt retractor of the second embodiment are substantially the same as those of the first embodiment. A seat belt device equipped with the seat belt retractor of the second embodiment has the same effects as those of the seat belt device of the first embodiment.

### [Advantages]

As described above, in the above-described seat belt retractor, EA load due to deformation of the energy absorbing member is variable according to the width of the member. Therefore, EA load is adjustable to, for example, the type of automobile. By adjusting an EA load to, for example, the type of automobile, the energy of impact made on an occupant is absorbed more effectively and more appropriately.

In this case, since the energy absorbing member is formed of a strip plate, the energy absorbing member is deformed continuously. Therefore, despite simple structure, the energy absorbing effect of the energy absorbing member is more stable. Since the energy absorbing mechanism is a simple strip shape, it is easily assembled and is produced at a low cost.

Especially in the case that the seat belt retractor comprises the torsion bar 7, a comparatively large EA load consisting of an EA load due to twist-deformation of the torsion bar 7 and another EA load due to deformation of the strip 22, and a comparatively small EA load consisting of only the EA load due to twist-deformation of the torsion bar 7 are generated. Therefore, EA load is flexibly adjustable, and the energy of impact made on an occupant is absorbed more effectively and more appropriately.

A belt device equipped with a seat belt retractor as described above thereby effectively absorbs the energy of impact made on the occupant, and restrains and protects the occupant appropriately.

## Claims

1. A seat belt retractor comprising:
a spool (4) for winding a seat belt (3);
a locking mechanism (6) having a locking member (14) that rotates together with the spool (4) during normal times and that is prevented from rotating in the direction of unwinding the seat belt (3) in an emergency; and
an energy absorbing mechanism (20) provided between the spool (4) and the locking member (14) and absorbing the energy of impact made on an occupant when the spool (4) rotates in the direction of unwinding the seat belt relative to the locking member (14) in an emergency,
wherein the energy absorbing mechanism (20) includes a strip energy absorbing member (22) provided in one of the spool (4) and the locking member (14), and deforming means (21d) provided in the other of the spool (4) and the locking member (14) for deforming the energy absorbing member (22);
the width of the strip energy absorbing member (22) varies from part to part; and
the deforming means (21d) deforms the energy absorbing member (22) that moves with the rotation of the spool.(4) when the spool (4) rotates in the direction of unwinding the seat belt relative to the locking member (14) that is prevented from rotating in the direction of unwinding the seat belt (3) in an emergency, thereby restricting the load applied to the seat belt (3) and absorbing the impact energy, and the amount of the absorbed impact energy varies from stage to stage.

2. A seat belt retractor according to Claim 1, wherein the deforming means (21d) is an arc groove and the strip energy absorbing member (22) is forced through the groove to be deformed.

3. A seat belt retractor according to Claim 1 or 2, wherein the spool (4) and the locking member (14) are connected with a torsion bar (7) that twists when the spool (4) and the locking member (14) rotate relative to each other.

4. A seat belt device comprising a seat belt retractor (1) according to any one of Claims 1 to 3, a seat belt (3) which is withdrawn from the seat belt retractor (1) and whose end is connected to an auto body, a buckle fixed to the auto body, and a tongue which is slidably fitted to the seat belt and which can engage with the buckle.
